# FASCICULE DE BREVET EUROPEEN

(11) **EP 1 914 163 B1**
(45) Date de publication et mention de la délivrance du brevet: **18.07.2012**
(21) Numéro de dépôt: 07291157.1
(22) Date de dépôt: 27.09.2007
(51) Int. Cl.: B64C 25/22

(54) **Architecture de système hydraulique de manoeuvre des atterrisseurs d'un aéronef**
Architektur eines hydraulischen Systems zum Manövrieren der Fahrwerke von Luftschiffen
Architecture of a hydraulic system for manoeuvring aircraft landing gear

(30) Priorité: 17.10.2006 FR 0609093
(43) Date de publication de la demande: 23.04.2008
(73) Titulaire: Messier-Bugatti-Dowty, 78140 Velizy Villacoublay (FR)
(72) Inventeur: Leutard, David, 92320 Chatillon (FR); Felemez, Eric, 78121 Crespieres (FR); Fremiot, Sébastien, 92100 Boulogne (FR)
(74) Mandataire: Parzy, Benjamin Alain

(56) Documents cités:
- EP-A- 0 544 560
- GB-A- 757 705
- GB-A- 973 364
- US-A- 2 459 665

## Description

### ARRIERE-PLAN DE L'INVENTION

On connaît des aéronefs comportant des systèmes hydrauliques de manoeuvre des atterrisseurs d'un aéronef comportant au moins une source de pression et un retour hydraulique. Le système hydraulique de manoeuvre des atterrisseurs comporte des actionneurs pour la manoeuvre des atterrisseurs qui sont reliés par un circuit hydraulique comportant une première ligne hydraulique dont la pressurisation provoque la descente des atterrisseurs, et une deuxième ligne hydraulique dont la pressurisation provoque le relevage des atterrisseurs. Ces lignes sont sélectivement pressurisées au moyen d'un organe de distribution hydraulique comportant une vanne d'isolation générale pour isoler sélectivement le circuit hydraulique de la source de pression de l'aéronef, et au moins un sélecteur pour mettre en communication l'une des lignes avec la pression, et l'autre des lignes avec le retour.

En cas de défaillance, par exemple si le sélecteur reste immobilisé dans une position intermédiaire dans laquelle il ferme les deux lignes et emprisonne du fluide hydraulique dans les actionneurs, la descente des atterrisseurs peut être empêchée. Il importe donc de munir le circuit hydraulique de moyens pour mettre au moins la ligne de relevage en communication avec le retour, de sorte que les atterrisseurs ne soient pas empêchés de descendre, au moins par gravité. A cet égard, il est connu de munir le circuit d'une vanne de décompression générale, commandée par câble directement par le pilote, ou par un moteur électrique qui est actionné lorsque le pilote pousse un interrupteur pour passer en mode de sortie secours. La vanne de décompression met les deux lignes au retour, ce qui évite tout emprisonnement de fluide dans les actionneurs empêchant la descente des atterrisseurs. Un autre exemple est donné dans le document EP 0 544 560.

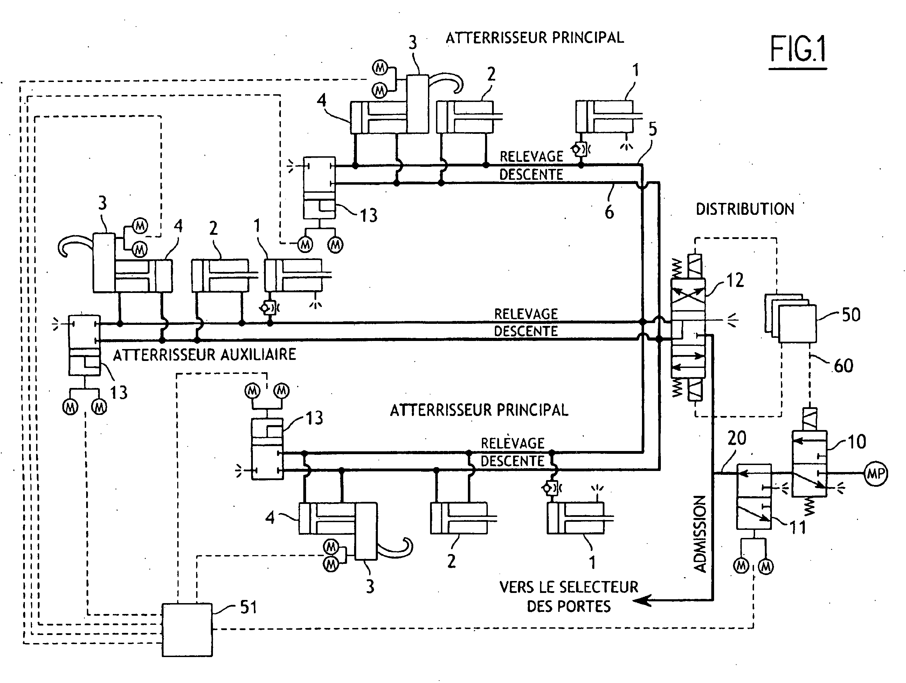

Dans certains aéronefs récents, il a été proposé, selon une architecture qui fait l'objet du schéma de la figure 1, de disposer non plus une vanne de décompression générale, mais plusieurs vannes de décompression délocalisées à proximité des atterrisseurs.

Le système de manoeuvre illustré ici est destiné à permettre la manoeuvre des atterrisseurs de l'aéronef et des portes de soute associées. La description est basée ici sur l'exemple d'un aéronef ayant deux atterrisseurs principaux et un atterrisseur auxiliaire.

Pour manoeuvrer les atterrisseurs, le système comporte divers actionneurs dont :
- des vérins de manoeuvre 1 des atterrisseurs dont la chambre annulaire est ici mise au retour, tandis que la chambre pleine est reliée à une ligne hydraulique 5 dénommée "RELEVAGE" sur la figure, de sorte que lesdits vérins de manoeuvre 1 provoquent le relevage des atterrisseurs lorsque la ligne "RELEVAGE" 5 est en pression, et que lesdits vérins de manoeuvre 1 ne s'opposent pas à une descente des atterrisseurs sous l'effet de la gravité lorsque la ligne "RELEVAGE" 5 est au retour;
- des vérins de verrouillage/déverrouillage 2 des contrefiches des atterrisseurs, dont la chambre annulaire est reliée à la ligne "RELEVAGE" 5 tandis que la chambre pleine est reliée à une ligne hydraulique 6 dénommée "DESCENTE", de sorte que lesdits vérins de verrouillage/déverrouillage 2 agissent pour déverrouiller les contrefiches lorsque du relevage des atterrisseurs, lorsque la ligne "RELEVAGE" 5 est en pression et la ligne "DESCENTE" 6 au retour, et que lesdits vérins de verrouillage/déverrouillage 2 agissent pour verrouiller les contrefiches lorsque la ligne "RELEVAGE" 5 est au retour et la ligne "DESCENTE" 6 en pression;
- des crochets 3 destinés à coopérer avec des olives d'accrochage disposées sur les atterrisseurs pour maintenir ces derniers en position relevée, et actionnés par des vérins hydrauliques 4 dont la chambre pleine est reliée à la ligne "RELEVAGE" 5 et la chambre annulaire est reliée à la ligne "DESCENTE" 6, de sorte que lesdits vérins agissent pour provoquer la fermeture des crochets sur les olives d'accrochage des atterrisseurs pour maintenir ceux-ci en position relevée à l'issue de leur relevage lorsque la ligne "RELEVAGE" 5 est en pression et la ligne "DESCENTE" 6 est au retour, et lesdits vérins agissent pour libérer les olives d'accrochages et permettre la descente des atterrisseurs lorsque la ligne "RELEVAGE" 5 est au retour et la ligne "DESCENTE" 6 en pression.

En amont des actionneurs, un organe de distribution sélective permet d'admettre la pression dans le système de manoeuvre des atterrisseurs, et de distribuer sélectivement la pression dans la ligne "RELEVAGE" 5 ou dans la ligne "DESCENTE" 6, l'autre ligne étant connectée au retour.

Plus précisément, l'organe de distribution comporte:
- une vanne d'isolation 10 commandée par un calculateur de manoeuvre 50, et qui permet d'admettre ou non la pression dans le circuit de manoeuvre des atterrisseurs;
- une vanne de coupure 11, dont l'utilité sera détaillée plus loin, et qui, par défaut, est passante;
- un sélecteur 12 à trois positions, commandé par le calculateur de manoeuvre 50, avec une première position neutre pour mettre la ligne "DESCENTE" 6 et la ligne "RELEVAGE" 5 au retour, une position de descente mettre la ligne "DESCENTE" 6 sous pression et la ligne "RELEVAGE" 5 au retour, et une position de relevage pour mettre la ligne "RELEVAGE" 5 sous pression et la ligne "DESCENTE" 6 au retour.

Comme indiqué sur la figure, le circuit hydraulique comporte, bien que cela ne soit pas représenté, un sélecteur similaire pour les portes de soutes des atterrisseurs, et, en aval du sélecteur de porte, des actionneurs de porte comportant des vérins de manoeuvre et des crochets.

Le fonctionnement est le suivant. Partant d'une situation où l'aéronef est en vol et les atterrisseurs sont relevés, le calculateur de manoeuvre 50 commande tout d'abord la vanne d'isolation 10 pour l'ouvrir est ainsi admettre la pression dans une ligne d'alimentation 20 allant de la vanne d'isolation 10 au sélecteur 12. Le sélecteur 12 est dans la position neutre de sorte que les lignes "DESCENTE" 6 et "RELEVAGE" 5 sont au retour. Le calculateur de manoeuvre 50 met alors le sélecteur 12 en position de descente, de sorte que la pression est admise dans la ligne "DESCENTE" 6, la ligne "RELEVAGE" 5 étant maintenue au retour. Les portes s'ouvrent, les crochets 3 sont commandés pour libérer les atterrisseurs, et ceux-ci descendent par gravité, jusqu'à une position déployée dans laquelle les vérins de verrouillage/déverrouillage 2 forcent le verrouillage des contrefiches et stabilisent ainsi les atterrisseurs en position déployée.

Lorsque l'aéronef a atterri puis redécollé, il suffit de placer le sélecteur 12 en position de relevage, de sorte que la ligne "RELEVAGE" 5 est mise en pression, tandis que la ligne "DESCENTE" 6 est maintenue au retour. Les vérins de verrouillage/déverrouillage 2 débloquent les contrefiches, ce qui permet aux atterrisseurs de remonter sous l'action des vérins de manoeuvre 1. Une fois arrivés en position relevée, les crochets 3 accrochent les olives d'accrochage des atterrisseurs pour les maintenir en position relevée. Les portes sont alors refermées, et le sélecteur 12 (et le sélecteur des portes) est remis en position neutre.

Il suffit alors de ne plus commander la vanne d'isolation 10 pour que celle-ci revienne en position de repos dans laquelle la ligne d'alimentation 20 des sélecteurs est mise au retour.

Certains cas de pannes, quoique statistiquement très improbables, pourraient empêcher les atterrisseurs de se déployer. On prendra comme exemple le cas où le sélecteur 12 reste bloqué dans une position intermédiaire dans laquelle il bouche les lignes "DESCENTE" 6 et "RELEVAGE" 5. Dans ce cas, le fluide hydraulique ne peut être chassé de la chambre pleine des vérins de manoeuvre 1, de sorte que les atterrisseurs sont bloqués. Pour palier à cet inconvénient, le circuit comporte trois vannes de décompression 13 disposées à proximité des atterrisseurs. Les vannes de décompression 13 sont normalement fermées, mais peuvent être commandées en secours pour mettre la ligne "DESCENTE" 6 et la ligne "RELEVAGE" 5 au retour, de sorte à supprimer tout risque d'emprisonnement de fluide hydrauliques dans les chambres des vérins 1,2,4.

A cet effet, les vannes de décompression 13, la vanne de coupure 11, et les crochets 3 sont munies chacune d'un organe actionnement électromécanique comportant ici deux moteurs électriques, qui est commandé par un calculateur de secours 51 activé par le pilote en cas de défaillance dans le fonctionnement normal du circuit, et qui prend la main sur le calculateur de manoeuvre.

Lorsqu'il est activé, le calculateur de secours 51 actionne la vanne de coupure 12 pour empêcher l'admission de pression dans le circuit, et mettre la ligne d'admission 20 au retour. Puis le calculateur de secours commande les vannes de décompression 13 pour mettre les lignes "DESCENTE" 6 et "RELEVAGE" 5 au retour. Enfin, le calculateur de secours 51 commande les crochets pour qu'ils libèrent les atterrisseurs, ceux-ci descendant sous l'effet de la gravité jusqu'à la position déployée dans laquelle les contrefiches sont verrouillées mécaniquement par des ressorts, comme cela est parfaitement connu.

### OBJET DE L'INVENTION

L'invention a pour objet un système de manoeuvre des atterrisseurs d'un aéronef, de structure simplifiée.

### BREVE DESCRIPTION DE L'INVENTION

En vue de la réalisation de ce but, on propose un système hydraulique de manoeuvre des atterrisseurs d'un aéronef selon la revendication 1, comportant au moins une source de pression et un retour hydraulique, le système hydraulique de manoeuvre des atterrisseurs comportant des actionneurs pour la manoeuvre des atterrisseurs qui sont reliés par un circuit hydraulique comportant une première ligne hydraulique dont la pressurisation provoque la descente des atterrisseurs, et une deuxième ligne hydraulique dont la pressurisation provoque le relevage des atterrisseurs, ces lignes étant sélectivement pressurisées au moyen d'un organe de distribution hydraulique comportant au moins une vanne d'isolation pour isoler sélectivement le circuit hydraulique de la source de pression de l'aéronef, et au moins un sélecteur pour mettre sélectivement en communication l'une des lignes avec la pression, et l'autre des lignes avec le retour. Selon l'invention, le système comporte des moyens de shunt passifs du sélecteur disposés entre la deuxième ligne et une ligne d'admission qui s'étend entre la vanne d'isolation et le sélecteur et par laquelle transite normalement la pression de l'aéronef, lesdits moyens de shunt passifs étant passants de la deuxième ligne vers la ligne d'admission mais bloquants dans l'autre sens.

### BREVE DESCRIPTION DES DESSINS

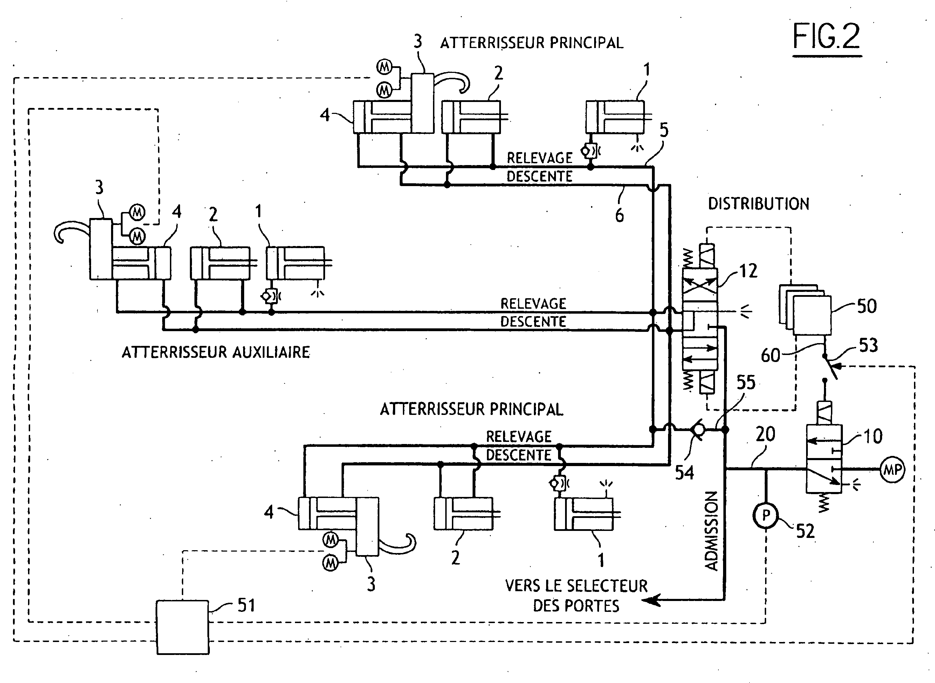

Outre la figure 1 illustrant une architecture utilisant des solutions connues, l'invention sera mieux comprise à la lumière de la description qui suit en référence à la figure 2 qui est un schéma d'une architecture de système de manoeuvre des atterrisseurs (et des portes de soute associées) selon un mode particulier de réalisation de l'invention.

### DESCRIPTION DETAILLEE DE L'INVENTION

Sur la figure 2, les éléments communs avec ceux de la figure 1 gardent les mêmes références. La figure 2 illustre un schéma très similaire à celui de la figure 1, à la différence près que les vannes de décompression 13 et la vanne de coupure 11 ont été supprimées.

A la place, il a été installé:
- un capteur de pression 52 sur la ligne d'alimentation, dont la mesure de pression est fournie au calculateur de secours 51;
- un relais 53 sur une ligne de commande électrique 60 allant du calculateur de manoeuvre 50 à la vanne d'isolation 10, le relais 53 étant commandé par le calculateur de secours 51;
- un clapet antiretour 54 placé sur une dérivation 55 entre la ligne "RELEVAGE" 5 et la ligne d'admission 20, monté passant depuis la ligne "RELEVAGE" 5 vers la ligne d'admission 20, et bloquant dans l'autre sens.

Le fonctionnement du circuit illustré à la figure 2 est le suivant. Lorsque la pression est admise dans la ligne d'admission 20, le clapet antiretour 54 est bloqué par la pression s'exerçant dans la ligne d'admission 20, de sorte qu'il ferme la dérivation 55. Le fonctionnement normal de ce circuit est alors en tout point identique à celui du schéma de la figure 1.

En cas de problème, le pilote active le calculateur de secours 51 qui prend la main et vérifie à l'aide du capteur de pression 52 si la ligne d'admission 20 est alimentée en pression. Si la pression dans la ligne d'admission 20 dépasse un seuil prédéterminé supérieur à la pression de retour, le calculateur de secours 51 commande le relais 53 pour couper la ligne de commande 60 entre le calculateur 50 et la vanne d'isolation 10, ce qui a pour effet de faire revenir cette dernière dans sa position d'isolation dans laquelle la ligne d'admission 20 est mise au retour.

Puis le calculateur de secours 51 commande alors les organes d'actionnement électromécaniques des crochets 3 de sorte que ceux-ci libèrent les atterrisseurs. Ceux-ci descendent par gravité, en repoussant le fluide contenu dans la ligne "RELEVAGE" 5 soit au travers du sélecteur 12, ou, si celui-ci est immobilisé dans une position intermédiaire bloquante, au travers du clapet antiretour 54. Le clapet antiretour 54 forme ainsi un moyen de shunt du sélecteur 12 totalement passif qui s'ouvre automatiquement lors de la descente des atterrisseurs, sans nécessiter de commande de la part du calculateur de secours 51.

Quant aux chambres connectées à la ligne "DESCENTE" 6, elles sont connectées au retour via le sélecteur 12. On remarquera que toutes les chambres connectées à la ligne "DESCENTE" 6 voient leur volume augmenter lors de la descente des atterrisseurs, de sorte que même si le sélecteur 12 était immobilisé dans une position intermédiaire bloquante, le fluide contenu dans ces chambres et dans la ligne "DESCENTE" 6 caviterait certes, mais sans pouvoir toutefois empêcher la descente des atterrisseurs.

On remarquera que dans l'architecture proposée, le calculateur de secours 51 ne commande plus que les organes d'actionnement électromécaniques des crochets 3 et le relais 53, ce qui permet de simplifier également le calculateur de secours 51.

En variante encore plus simple, il est possible de se passer de capteur de pression 52, si l'on prend la précaution, en mode de fonctionnement secours, de commander systématiquement le relais 53 de sorte qu'il ouvre la ligne de commande entre le calculateur de manoeuvre 50 et la vanne d'isolation 10. On garantit ainsi que la ligne d'admission 20 est mise au retour, de sorte que le clapet antiretour 54 ne sera pas empêché de s'ouvrir lors de la descente des atterrisseurs.

L'architecture ainsi proposée est donc bien plus simple, et les équipements de secours utilisés (relais 53, clapet antiretour 54, le cas échéant capteur de pression 52) sont des éléments basiques et peu onéreux. Ces équipements de secours sont bien moins lourds et complexes que les vannes de décompression 13 et la vanne de coupure 11 qui comportent des organes d'actionnement électromécaniques lourds et complexes.

L'invention n'est pas limitée à ce qui vient d'être décrit, mais bien au contraire englobe toute variante entrant dans le cadre défini par les revendications.

En particulier, bien que l'invention ait été ici illustrée en application à un système de manoeuvre des atterrisseurs dans lequel les atterrisseurs descendent sous l'effet de la gravité, l'invention s'applique bien évidemment à un système dans lequel les atterrisseurs descendent sous l'effet de la pression.

Bien que l'on ait décrit des moyens de shunt passifs du sélecteur s'étendant entre la ligne de relevage et la ligne d'admission 20 sous la forme d'une dérivation équipée d'un clapet antiretour monté passant de la ligne de relevage vers la ligne d'admission 20, les moyens de shunt passifs du sélecteur pourront être intégrés directement dans le sélecteur.

Bien que les moyens de mise au retour forcée (c'est-à-dire pour isoler le circuit de la pression de la source de pression de l'aéronef et mettre la ligne d'admission 20 au retour) comprennent ici un relais qui coupe une ligne de commande électrique de la vanne d'isolation, lesdits moyens pourront prendre d'autres formes, comme un organe électromécanique d'actionnement de la vanne d'isolation qui serait commandé par le calculateur de secours et qui forcerait la vanne d'isolation vers sa position de repos, bien que ce type de solution semble a priori plus lourde.

Enfin, bien que l'architecture illustrée comporte à la fois les moyens de shunt passifs du sélecteur et les moyens de mise au retour forcée de la vanne d'isolation, on pourra n'utiliser que l'un des deux moyens, ce qui conduit à des architectures intermédiaires qui, tout en n'étant pas totalement optimisées, apportent néanmoins des améliorations en termes de masse, complexité, et coût par rapport aux solutions connues.

## Revendications

1. Système hydraulique de manoeuvre des atterrisseurs d'un aéronef comportant au moins une source de pression et un retour hydraulique, le système hydraulique de manoeuvre des atterrisseurs comportant des actionneurs (1,2,4) pour la manoeuvre des atterrisseurs qui sont reliés par un circuit hydraulique comportant une première ligne hydraulique ("DESCENTE" 6) dont la pressurisation provoque la descente des atterrisseurs, et une deuxième ligne hydraulique ("RELEVAGE" 5) dont la pressurisation provoque le relevage des atterrisseurs, ces lignes étant sélectivement pressurisées au moyen d'un organe de distribution hydraulique (10,12) comportant au moins un sélecteur (12) pour mettre en communication l'une des lignes avec la pression, et l'autre des lignes avec le retour, et des moyens de shunt (54, 55) du sélecteur, **caractérisé en ce qu'**il comporte au moins une vanne d'isolation (10) pour isoler sélectivement le circuit hydraulique de la source de pression de l'aéronef, de sorte à mettre sélectivement une ligne d'admission (20) s'étendant entre la vanne d'isolation et le sélecteur en communication avec la source de pression ou le retour hydraulique, la mise au retour correspondant à une position de repos de la vanne d'isolation, et les moyens de shunt (54,55) du sélecteur sont passifs et disposés entre la deuxième ligne ("RELEVAGE" 5) et la ligne d'admission (20), lesdits moyens de shunt passifs étant passants de la deuxième ligne vers la ligne d'admission mais bloquants dans l'autre sens.

2. Système selon la revendication 1, dans lequel les moyens de shunt passifs comprennent une dérivation (55) s'étendant entre la deuxième ligne ("RELEVAGE" 5) et la ligne d'admission (20), et un clapet antiretour (54) monté passant de la deuxième ligne ("RELEVAGE" 5) vers la ligne d'admission (20).

3. Système selon la revendication 1, comportant en outre des moyens de mise au retour forcée (53) pour forcer la vanne d'isolation (10) à isoler le circuit de la pression de l'aéronef et mettre la ligne d'admission (20) au retour.

4. Système selon la revendication 3, dans lequel les moyens de mise au retour forcée comportent un relais (53) disposé pour couper sélectivement une ligne de commande électrique (60) de la vanne d'isolation (10) de sorte que celle-ci revienne ou reste maintenue dans une position dans laquelle elle met la ligne d'admission au retour.

5. Système selon la revendication 4, les moyens de mise au retour forcée ne sont déclenchés qu'en réponse à la présence d'une pression dans la ligne d'admission dépassant un seuil prédéterminé supérieur à une pression de retour.

## Claims

1. An hydraulic system for operating landing gear of an aircraft that includes at least one source of hydraulic pressure and at least one hydraulic return, the hydraulic system for operating the landing gear comprising actuators (1, 2, 4) for operating undercarriages, which actuators are connected to a hydraulic circuit comprising a first hydraulic line ("DOWN" 6) that, when pressurized, causes the undercarriages to be lowered, and a second hydraulic line ("UP" 5) that, when pressurized, causes the undercarriages to be raised, said lines being pressurized selectively by means of a hydraulic distribution member (10, 12) comprising, at least one selector (12) for putting one of the lines into communication with pressure and the other line in communication with return and shunt means (54, 55) for bypassing the selector, **characterized in that** the hydraulic system includes at least one isolation valve (10) for selectively isolating the hydraulic circuit from the pressure source of the aircraft, and the shunt means are passive and are placed between the second line ("UP" 5) and an admission line (20) that extends between the isolation valve and the selector, and that normally conveys the pressure of the aircraft, said passive shunt means passing fluid flow from the second line towards the admission line, but blocking flow in the opposite direction.

2. A system according to claim 1, in which the passive shunt means comprise a branch connection (55) extending between the second line ("UP" 5) and the admission line (20), together with a check valve (54) mounted to pass fluid from the second line ("UP" 5) towards the admission line (20).

3. A system according to claim 1, further including forced return connection means (53) for forcing the isolation valve (10) to isolate the pressure circuit of the aircraft and to connect the admission line (20) to return.

4. A system according to claim 3, in which the forced return connection means comprise a relay (53) connected to interrupt selectively an electrical control line (60) for controlling the isolation valve (10) so that the valve returns to or remains held in a position in which it connects the admission line to return.

5. A system according to claim 4, in which the forced return connection means are triggered only in response to pressure being present in the admission line above a predetermined threshold higher than the return pressure.

## Patentansprüche

1. Hydraulisches System zum Manövrieren von Fahrwerken eines Flugzeugs, umfassend mindestens eine Druckquelle und einen Hydraulikrücklauf, wobei das hydraulische System zum Manövrieren von Fahrwerken Aktuatoren (1, 2, 4) zum Manövrieren der Fahrwerke umfasst, wobei die Aktuatoren durch einen Hydraulikkreis verbunden sind, der eine erste hydraulische Leitung ("AUSFAHREN" 6) umfasst, deren Druckbeaufschlagung das Ausfahren der Fahrwerke bewirkt, sowie eine zweite hydraulische Leitung ("EINZIEHEN" 5), deren Druckbeaufschlagung das Einziehen der Fahrwerke bewirkt, wobei diese Leitungen mit Hilfe einer Hydrauliksteuervorrichtung (10, 12) selektiv unter Druck gesetzt werden, die mindestens einen Wähler (12) umfasst, um eine der Leitungen mit dem Druck und die andere der Leitungen mit dem Rücklauf zu verbinden, sowie Nebenschlussmittel (54, 55) zum Shunten des Wählers, **dadurch gekennzeichnet, dass** es mindestens ein Absperrventil (10) zum selektiven Absperren des Hydraulikkreises von der Druckquelle des Flugzeugs umfasst, derart, dass eine Zuführungsleitung (20), die sich zwischen dem Absperrventil und dem Wähler erstreckt, selektiv mit der Druckquelle oder dem Hydraulikrücklauf verbunden wird, wobei das Umschalten auf Rücklauf einer Ruhestellung des Absperrventils entspricht, und die Nebenschlussmittel (54, 55) passive sind und zwischen der zweiten Leitung ("EINZIEHEN" 5) und der Zuführungsleitung (20) angeordnet sind, wobei die genannten passiven Nebenschlussmittel einen Durchgang von der zweiten Leitung zur Zuführungsleitung vorsehen, aber die andere Richtung blockieren.

2. System nach Anspruch 1, wobei die passiven Nebenschlussmittel eine Ableitung (55) umfassen, die sich zwischen der zweiten Leitung ("EINZIEHEN" 5) und der Zuführungsleitung (20) erstreckt, sowie ein Rückschlagventil (54), das einen Durchgang von der zweiten Leitung ("EINZIEHEN" 5) zur Zuführungsleitung (20) vorsieht.

3. System nach Anspruch 1, ferner umfassend Mittel (53) zum Umschalten in einen Zwangsrücklauf, um das Absperrventil (10) zu zwingen, den Druckkreis des Flugzeugs abzusperren und die Zuführungsleitung (20) zum Rücklauf zu machen.

4. System nach Anspruch 3, wobei die Mittel zum Umschalten in einen Zwangsrücklauf ein Relais (53) umfassen, das so angeordnet ist, dass es eine elektrische Steuerleitung (60) des Absperrventils (10) selektiv abtrennt, derart, dass dieses in eine Stellung zurückkehrt bzw. in derselben gehalten wird, in der es die Zuführungsleitung zum Rücklauf macht.

5. System nach Anspruch 4, wobei die Mittel zum Umschalten in einen Zwangsrücklauf nur in Antwort auf das Vorhandensein eines Druckes in der Zuführungsleitung ausgelöst werden, der einen vorgegebenen Schwellenwert übersteigt, der größer als ein Rücklaufdruck ist.
